Europäisches Patentamt

European Patent Office

Office européen des brevets

(19)

(11) Veröffentlichungsnummer : **0 412 189 B1**

# (12) EUROPÄISCHE PATENTSCHRIFT

(45) Veröffentlichungstag der Patentschrift :
**28.10.92 Patentblatt 92/44**

(51) Int. Cl.$^5$ : **G01V 5/00**

(21) Anmeldenummer : **89114761.3**

(22) Anmeldetag : **09.08.89**

(54) **Vorrichtung zum Durchstrahlen von Gegenständen mit fächerförmiger Strahlung.**

(43) Veröffentlichungstag der Anmeldung :
**13.02.91 Patentblatt 91/07**

(45) Bekanntmachung des Hinweises auf die
Patenterteilung :
**28.10.92 Patentblatt 92/44**

(84) Benannte Vertragsstaaten :
**BE DE FR GB NL**

(56) Entgegenhaltungen :
**EP-A- 0 194 477
EP-A- 0 354 045
DE-U- 8 506 187
PATENT ABSTRACTS OF JAPAN, Band 8, Nr.
192 (P-298), 4. September 1984, Seite 1629; &
JP-A-59 81 544 (NIPPON REGULATORK.K.)
11-05-1984
MATERIALS EVALUATION, Band 30, Nr. 5,
1972, Seite 54a: "Mobile X-ray unit (on a trailer) 'Eyes' airport luggage, packages"
PATENT ABSTRACTS OF JAPAN, Band 10, Nr.
358 (P-522), 2. Dezember 1986, Seite 2415; &
JP-A-61 155 843 (TOSHIBA CORP.)15-07-1986**

(73) Patentinhaber : **Heimann GmbH
Weher Köppel 6 Postfach 30 07
W-6200 Wiesbaden 1 (DE)**

(72) Erfinder : **Bermbach, Rainer, Dr.-Ing.
Gustavsburger Weg 10
W-6500 Mainz-Laubenheim (DE)**
Erfinder : **Geus, Georg, Dipl.-Ing.
Asternweg 56
W-6200 Wiesbaden (DE)**
Erfinder : **Dönges, Gerhard, Dipl.-Ing.
Am Markt 1
W-6209 Heidenrod (DE)**
Erfinder : **Koch, Cornelius, Dipl.-Ing.
Leberberg 20
W-6200 Wiesbaden (DE)**

(74) Vertreter : **Fuchs, Franz-Josef, Dr.-Ing. et al
Postfach 22 13 17
W-8000 München 22 (DE)**

EP 0 412 189 B1

Jouve, 18, rue Saint-Denis, 75001 PARIS

**Beschreibung**

Die Erfindung betrifft eine Vorrichtung zum Durchstrahlen von Gegenständen, vorzugsweise Containern und/oder Fahrzeugen mit fächerförmiger Strahlung, die beispielsweise an Flughäfen eingesetzt wird, um den Inhalt von Gegenständen auf Bomben, Waffen, Drogen und Schmuggelgut zu durchsuchen.

Aus dem DE-GM 85 06 187 ist eine Vorrichtung zur Durchsuchung von Containern bekannt. Bei dieser Vorrichtung ist die Fächerebene eines Strahlengenerators senkrecht zu einer Transportstrecke für Container ausgerichtet. Die fächerförmige Strahlung des Strahlengenerators trifft, nachdem sie einen Teilquerschnitt des Containers durchdrungen hat, auf einen zeilenförmigen Strahlenempfänger, an dem eine Einrichtung zur Signalauswertung angeschlossen ist. Zur vollständigen Durchstrahlung des Querschnittes des Containers wird der Strahlengenerator jeweils um den Fächerwinkel verschwenkt, oder es sind beispielsweise drei Strahlengeneratoren vorgesehen, die um den Fächerwinkel versetzt angeordnet sind, so daß die Strahlung jedes Fächers auf einen Bereich eines L-förmigen Strahlenempfängers auftrifft. Die Signale des Strahlenempfängers werden, während der Container auf einer von Rollen gebildeten Transportstrecke am Strahlengenerator und Strahlenempfänger vorbeigeführt wird, in einer Bildverarbeitungsanlage verarbeitet, so daß, wenn der Container den Strahlengenerator und den Strahlenempfänger passiert hat, ein Strahlungsschattenbild des Containers auf einem Monitor wiedergegeben wird.

Aus der EP-A-O 194 477 ist ein Röntgenscanner für Gepäckuntersuchungen bekannt, der ein fächerförmiges Röntgenstrahlenbündel aussendet, das ein zu untersuchendes Gut durchdringt und auf eine Zeile von Einzeldetektoren auftrifft. Die Signale der Einzeldetektoren werden einer Bildverarbeitungseinrichtung zugeführt, der ein Sichtgerät nachgeschaltet ist. Die Verarbeitungsvorrichtung bewirkt eine Kompensation der Offset-Werte der Einzeldetektoren.

In der prioritätsälteren, aber nachveröffentlichten EP O 354 045 A2 ist eine Gepäckprüfanlage beschrieben, bei der das Gepäckstück auf das Vorhandensein von Drogen oder explosive Materialien untersucht wird. Hierzu wird eine Spektralanalyse des Gepäckstückes mit Röntgenstrahlung erstellt, eine Signalverarbeitungsvorrichtung vergleicht das Energiespektrum des Gepäckstückes mit bekannten Energiespektren von Drogen bzw. explosivem Material.

Eine Vorrichtung, mit der ein Gegenstand hinsichtlich seiner Abmessungen überprüft werden kann, ist aus JP-A-61-155843 bekannt. Hierzu wird der Gegenstand mit Röntgenstrahlung durchstrahlt und die von einem Strahlenempfänger erhaltenen Signale einem Rechner zugeführt, der diese Signale von den Signalen einer Standardmaske, die den "Soll"-Abmessungen des Gegenstandes entspricht, subtrahiert. Aus den Differenzsignalen wird die Größe des Gegenstandes bestimmt, eine Abweichung wird als Fehler angezeigt.

Die JP-A-59-81544 offenbart eine Vorrichtung, mit der hergestellte Teile mittels Röntgenstrahlung auf Materialfehler untersucht werden können. Das Strahlenschattenbild eines Teiles wird von einer Fernsehkamera aufgenommen, deren Signale einer Schaltungsanordnung zugeführt werden, die diese Signale mit den Signalen eines fehlerfreien Teiles vergleicht. Auf einem Sichtgerät werden nur die Materialfehler dargestellt.

Aufgabe der Erfindung ist es, eine Vorrichtung der eingangs genannten Art so auszuführen, daß die Identifizierbarkeit von Teilen, die sich im Gegenstand befinden, verbessert ist.

Die Aufgabe wird erfindungsgemäß durch eine Vorrichtung zum Durchstrahlen von Gegenständen mit fächerförmiger Strahlung, mit einem Strahlenempfänger, der die den Gegenstand durchdringende Strahlung empfängt, mit einem Rechner, der dem Strahlenempfänger nachgeschaltet ist, zum Berechnen eines Bildes des durchstrahlten Gegenstandes anhand der Signale des Strahlenempfängers, mit einem Speicher, in dem ein Referenzbild des Gegenstandes gespeichert ist, wobei einer Vergleichsschaltung die Bildsignale des Rechners und die Signale des Referenzbildes zugeführt werden, wobei der Vergleichsschaltung ein Monitor nachgeschaltet ist zum Anzeigen des Differenzbildes aus den Signalen des Rechners und den Signalen des Referenzbildes und wobei im Speicher mehrere durch eine Auswahlschaltung abrufbare Referenzbilder gespeichert sind, gelöst - gemäß Patentanspruch 1.

Vorteil der Erfindung ist, daß auf dem Bildschirm des Monitors nur die Teile gezeigt werden, die nicht im Referenzbild des Gegenstandes enthalten sind. Ein leichtes Auffinden von unzulässigem Gut ist möglich. Sind im Speicher mehrere durch eine Auswahlschaltung abrufbare Referenzbilder gespeichert, so ist es hierdurch möglich, für jeden zu durchsuchenden Gegenstand ein Referenzbild aufzurufen und durch den Vergleich mit dem Bild des Rechners Gegenstände zu finden, die nicht dem Originalzustand des Gegenstandes entsprechen.

Vorteilhafterweise ist die Vorrichtung zum Durchstrahlen von Containern und/oder Fahrzeugen ausgebildet - gemäß Patentanspruch 2.

Weitere Vorteile und Einzelheiten der Erfindung ergeben sich aus der nachfolgenden Beschreibung eines Ausführungsbeispieles anhand der Zeichnungen.

Figur 1 zeigt eine Transportstrecke, die durch einen Tunnel der Vorrichtung nach der Erfindung führt,

Figur 2 zeigt die Anordnung der Strahlengeneratoren und der Strahlenempfänger in einem transportablen Container der Vorrichtung nach der Erfindung in Seitenansicht,

Figur 3 zeigt die Vorrichtung nach der Erfindung in Draufsicht und

Figur 4 eine Signalverarbeitungseinrichtung der Vorrichtung nach der Erfindung.

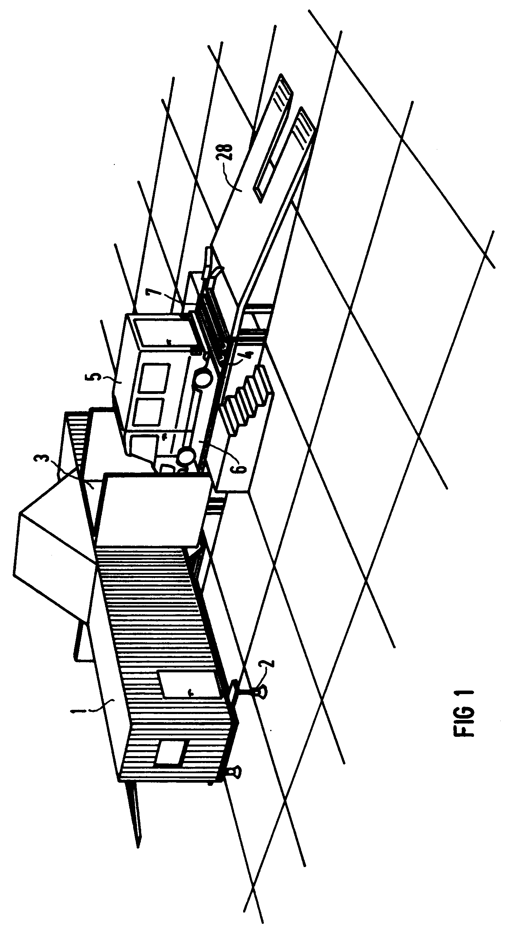

Die Figur 1 zeigt einen Container 1, der auf Stützen 2 lagert und durch den ein Tunnel 3 führt, der an seiner Eingangs- und an seiner Ausgangsseite offen ist. Eine Transportstrecke 4 für Gegenstände, beispielsweise Gepäck, vorzugsweise Container und/oder Fahrzeuge 5, führt durch diesen Tunnel 3. Die Transportstrecke 4 besitzt eine röntgenstrahlendurchlässige Palette 6, die auf angetriebenen Rollen 7 gelagert ist und die den Container und/oder das Fahrzeug 5 trägt.

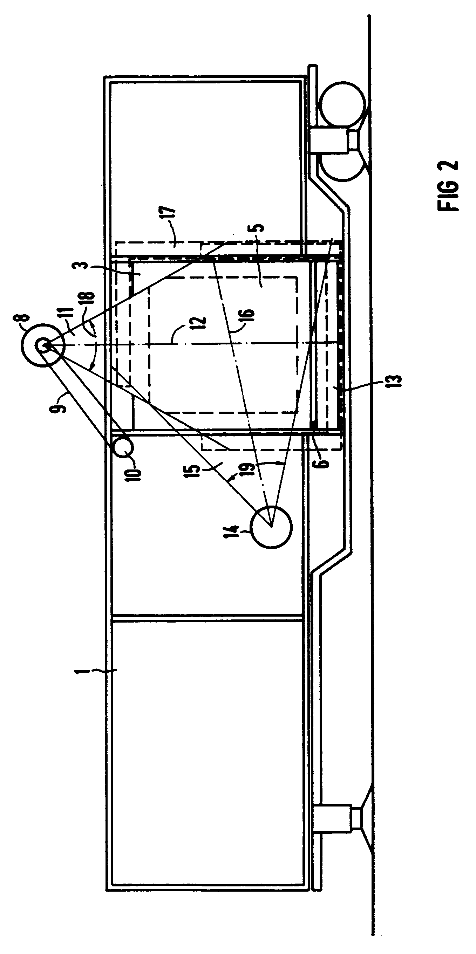

Die Figur 2 zeigt den Container 1 in seitlicher Darstellung im Längsschnitt. Elemente, die bereits in der Figur 1 gekennzeichnet sind, besitzen in der Figur 2 dieselben Bezugszeichen. Die Figur 2 zeigt, daß der Container und/oder das Fahrzeug 5 auf der Palette 6 in den Tunnel 3 eingefahren wurde. Ein erster Strahlengenerator 8 ist über eine Anlenkung 9 um eine zur Transportrichtung der Transportstrecke parallele Achse 10 schwenkbar. Hierdurch kann der Abstand des Strahlengenerators 8 zum Container und/oder Fahrzeug 5 optimal eingestellt werden. Die vom Strahlengenerator 8 ausgesandte Fächerebene 11 ist senkrecht zur Transportrichtung der Transportstrecke. Dabei ist der Zentralstrahl 12 der Fächerebene 11 vertikal ausgerichtet, so daß die Strahlung des Strahlengenerators 8 auf einen U-förmig ausgebildeten Strahlenempfänger 13 auftrifft. Ein weiterer Strahlengenerator 14 ist vorgesehen. Die von dem Strahlengenerator 14 ausgesandte Fächerebene 15 ist ebenfalls senkrecht zur Transportrichtung der Transportstrecke, wobei der Zentralstrahl 16 der Fächerebene 15 annähernd horizontal ausgerichtet ist, so daß die vom Strahlengenerator 14 ausgesandte Strahlung auf einen L-förmig ausgebildeten Strahlenempfänger 17 trifft.

Der Fächerwinkel 18 der Fächerebene 11 ist so weit geöffnet daß die Strahlung des Strahlengenerators 8 den Querschnitt des Containers und/oder des Fahrzeuges 5 von oben her vollständig durchdringt und vom U-förmigen Strahlenempfänger 13 empfangen wird. Der Fächerwinkel 19 der Fächerebene 15 ist ebenfalls so weit geöffnet, daß die Strahlung des Strahlengenerators 14 den Querschnitt des Containers und/oder des Fahrzeuges 5 seitlich vollständig durchdringt, so daß die Strahlung auf den L-förmigen Strahlenempfänger 17 auftrifft. Gleichwirkend ist eine Anordnung, bei der der Fächerwinkel 18, 19 der Strahlengeneratoren 8, 14 kleiner ausgebildet ist, wenn die Strahlengeneratoren 8, 14 um eine zur Transportrichtung der Transportstrecke parallele Achse verschwenkbar sind, so daß beim Verschwenken der Generatoren 8, 14 die Strahlung den Querschnitt des Containers und/oder des Fahrzeuges 5 vollständig durchdringt.

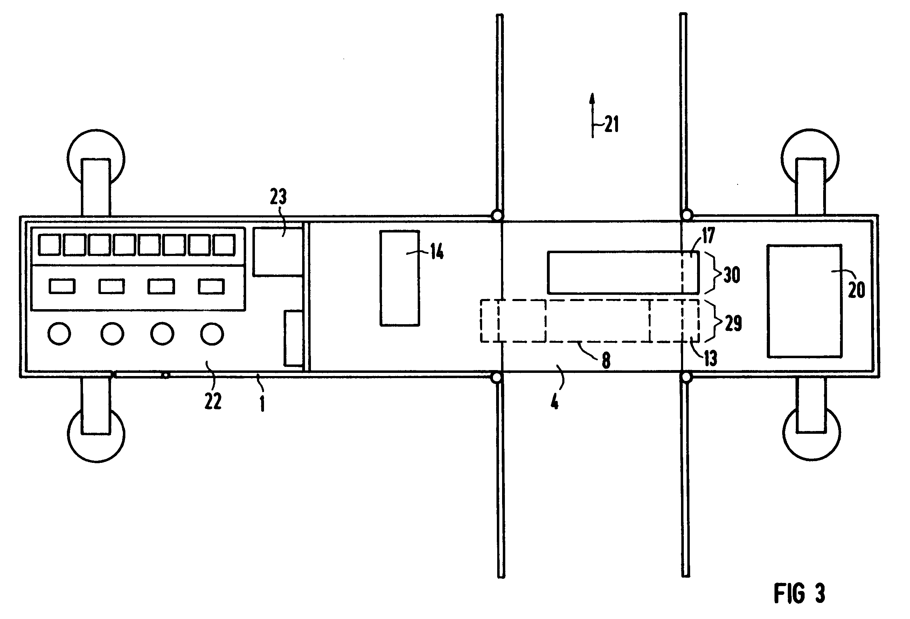

Die Figur 3 zeigt den Container 1 in Draufsicht. Elemente, die bereits in den Figuren gekennzeichnet wurden, erhalten in der Figur 3 dieselben Bezugszeichen. Die Figur 3 zeigt, daß eine Stromversorgung 20 für die Strahlengeneratoren 8, 14, die Strahlengeneratoren 8, 14, die Strahlenempfänger 13, 17 und ein Bereich der Transportstrecke 4 im Container 1 angeordnet sind. Die Strahlenempfänger 13, 17 und die Strahlengeneratoren 8, 14 sind in Transportrichtung 21 der Transportstrecke 4 seitlich zueinander versetzt angeordnet. Im Container 1 ist ein Bedienbereich 22 vorgesehen, in dem Bedienelemente für die Strahlengeneratoren 8, 14 und die Transportstrecke 4 sowie eine Bildverarbeitungseinrichtung 23 angeordnet sind.

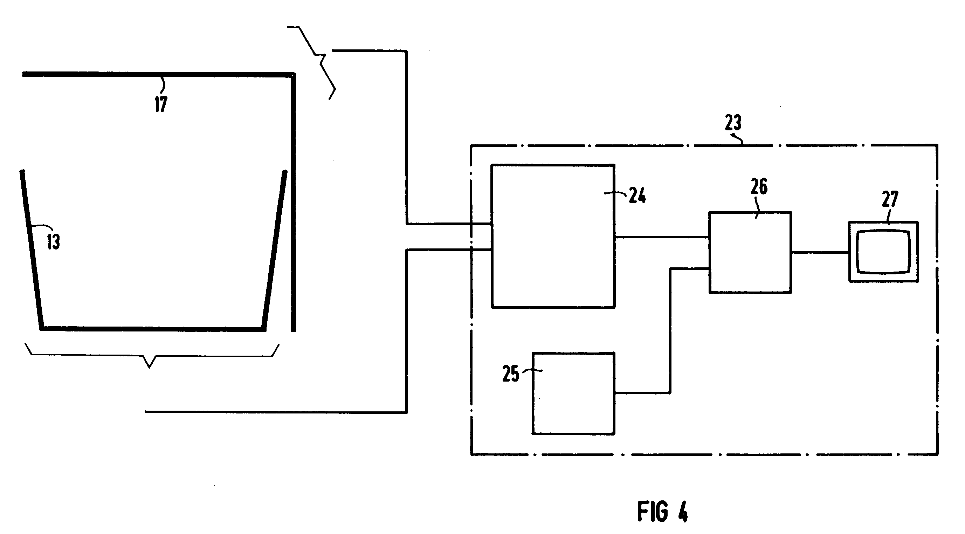

Die Figur 4 zeigt die Bildverarbeitungseinrichtung 23 in prinzipieller Darstellung. Die Signale der Strahlenempfänger 13, 17 werden einem Rechner 24 zum Berechnen eines Bildes aus den von den Strahlenempfängern 13, 17 empfangenen Signalen zugeführt. Es ist ein Speicher 25 vorgesehen, in dem die Bildsignale eines Referenzbildes eines Containers und/oder Fahrzeuges abgespeichert sind. Die Speicherkapazität des Speichers 25 ist so groß, daß mehrere Referenzbilder für Fahrzeuge und/oder Container abgespeichert werden können. Zum Abrufen der Referenzbilder ist eine nicht gezeigte Auswahlschaltung vorgesehen. Einer Vergleichsschaltung 26 werden die Bildsignale des Rechners 24 und die Signale des Referenzbildes aus dem Speicher 25 zugeführt. Der Vergleichsschaltung 26 ist ein Monitor 27 nachgeschaltet zum Anzeigen des Differenzbildes aus den Bildsignalen des Rechners 24 und den Signalen des Referenzbildes.

Im nachfolgenden soll das Durchsuchen eines Containers und/oder Fahrzeuges nach unzulässigen Gegenständen mit einer Vorrichtung nach der Erfindung beschrieben werden.

Ein Fahrzeug und/oder Container 5 wird hierzu über eine Auffahrrampe 28 (Fig. 1) oder über eine nicht gezeigte Hebevorrichtung auf die Palette 6 der Transportstrecke 4 aufgefahren bzw. aufgebracht. Nachdem der Fahrer das Fahrzeug verlassen hat, wird die Palette 6 durch die angetriebenen Rollen 7 der Transportstrecke 4 mit gleichförmiger Geschwindigkeit in den Tunnel 3 eingefahren. Erreicht das vordere Ende des Containers und/oder des Fahrzeuges 5 den Bereich 29 (Fig. 3) der Transportstrecke 4, so wird der Strahlengenerator 8 zum Aussenden eines Strahlungsimpulses für die Dauer des Durchlaufes aktiviert. Dabei wird der Container und/oder das Fahrzeug 5 von der Strahlung des Strahlengenerators 8 in vertikaler Richtung vollständig durchdrungen, die dann auf den Strahlenempfänger 13 auftrifft. Der Strahlenempfänger 13 wandelt das Strahlungsschattenbild des Containers und/oder Fahrzeuges 5 in elektrische Signale, die dem Rechner 24 zugeführt werden. Beim Erreichen eines Bereiches 30 (Fig. 3) der Transportstrecke 4 wird der Strahlengenerator 14 angesteuert zum Aussenden eines Strahlungsimpulses, der den Container und/oder das Fahrzeug 5 annähernd horizontal durchdringt und der dann auf den Strahlenempfänger 17 auftrifft. Der Strahlenempfänger 17 wandelt das seitliche Strahlungsschattenbild des Containers und/oder des Fahrzeuges 5 in elektrische Signale, die ebenfalls dem Rechner 24 zugeführt werden. Der Container und/oder das Fahrzeug 5 wird scheibenförmig durchstrahlt, wobei die Signale der Strahlenempfänger 13, 17 jeder Scheibe in einem nicht gezeigten Speicher des Rechners 24 abgespeichert werden. Der Rechner 24 berechnet während oder nachdem der Container und/oder das Fahrzeug 5 die Bereiche 29, 30 durchfahren hat, aus den Signalen der Strahlenempfänger 13, 17 ein Strahlungsschattenbild des Containers und/oder des Fahrzeugs 5. Dieses Bild kann ebenfalls in einem Speicher gespeichert werden.

Es ist zu erwähnen, daß die Wände des Containers 1 so ausgelegt sind, daß die Eingangs- und die Ausgangsseite des Tunnels 3 offen sein kann, ohne daß aus den Öffnungen eine unzulässig hohe Strahlung austritt. Dies kann beispielsweise durch eine ausreichend starke Bleiabschirmung im Bereich der Strahlengeneratoren 8, 14 und der Strahlenempfänger 13, 17 erreicht werden.

Durch die Erfindung ist eine Vorrichtung zur Darstellung des Differenzbildes aus dem Bild des durchstrahlten Containers und/oder Fahrzeuges und dem des Referenzbildes des Containers und/oder Fahrzeuges geschaffen. Durch diese Darstellung werden auf dem Bildschirm des Monitors nur Gegenstände sichtbar, die nicht im Referenzbild des Containers und/oder Fahrzeuges enthalten sind. Es ist somit sehr leicht möglich, Gegenstände, die nicht dem Originalzustand des Containers und/oder Fahrzeuges entsprechen, aufzufinden und auf Zulässigkeit zu überprüfen.

Soll die Materialbeschaffenheit der Gegenstände bestimmt werden, so sind die Strahlengeneratoren 8, 14 mit unterschiedlichen Strahlenenergien anzusteuern. Durch den Vergleich mindestens zweier deckungsgleicher Röntgenbilder, die mit unterschiedlichen Strahlenenergien angefertigt wurden, ist es möglich, Gegenstände mit niedriger und hoher Ordnungszahl zu unterscheiden. Somit können organische Materialien, wie Drogen und Sprengstoffe, deutlich von anderen Materialien, z.B. Metallen (Waffen), unterschieden werden. Besonders vorteilhaft ist es, wenn die Differenz der Strahlenabsorption bei unterschiedlichen Strahlenenergien als Information von Pseudofarben auf dem Bildschirm des Monitors erscheint. Sprengstoff und Drogen können so leicht festgestellt werden.

Der Container 1 ist mobil ausgeführt, so daß er auf einen LKW verladen werden kann und damit transportierbar ist. Hierzu kann der Container zerlegbar sein, so daß seine Einzelteile auch auf mehreren LKW transportierbar sind.

Die Figuren zeigen eine Vorrichtung zum Durchstrahlen von Containern und/oder Fahrzeugen. Eine erfindungsgemäße Vorrichtung ist jedoch nicht hierauf beschränkt. Es können ebenso Gepäckstücke, beispielsweise Koffer und Taschen, durchsucht werden, wenn die Vorrichtung entsprechend ausgelegt ist.

In der Figur 4 sind die beiden Schenkel des U-förmigen Strahlenempfängers 13 im Gegensatz zur Figur 2 in einem stumpfen Winkel gegenüber dem mittleren Schenkel geneigt. Dies führt zu einer besonders großen Eingangsbreite des Meßfeldes.

**Patentansprüche**

1. Vorrichtung zum Durchstrahlen von Gegenständen (5) mit fächerförmiger Strahlung (11, 15),
   - mit einem Strahlenempfänger (13, 17), der die den Gegenstand (5) durchdringende Strahlung empfängt,
   - mit einem Rechner (24), der dem Strahlenempfänger (13, 17) nachgeschaltet ist, zum Berechnen eines Bildes des durchstrahlten Gegenstandes (5) anhand der Signale des Strahlenempfängers (13, 17),
   - mit einem Speicher (25), in dem ein Referenzbild des Gegenstandes (5) gespeichert ist,
   - wobei einer Vergleichsschaltung (26) die Bildsignale des Rechners (24) und die Signale des Referenzbildes zugeführt werden,
   - wobei der Vergleichsschaltung (26) ein Monitor (27) nachgeschaltet ist zum Anzeigen des Differenzbildes aus den Signalen des Rechners (24) und den Signalen des Referenzbildes und
   - wobei im Speicher (25) mehrere durch eine Auswahlschaltung abrufbare Referenzbilder gespeichert sind.

2. Vorrichtung nach Anspruch 1, wobei die Vorrichtung zum Durchstrahlen von Containern und/oder Fahrzeugen (5) ausgebildet ist.

**Claims**

1. Device for irradiating objects (5) with fan-shaped radiation (11, 15),
   - having a radiation detector (13, 17) which detects the radiation penetrating the object (5),
   - a computer (24) which is connected on the output side of the radiation detector (13, 17) for computing an image of the irradiated object (5) by means of the signals from the radiation detector (13, 17),

-a memory (25) in which a reference image of the object (5) is stored,

-wherein the image signals of the computer (24) and the signals of the reference image are supplied to a comparison circuit (26),

-wherein a monitor (27) is connected on the output side of the comparison circuit (26) for displaying the differential image derived from the signals of the computer (24) and the signals of the reference image, and

-wherein several reference images which can be recalled by a selection circuit are stored in the memory (25).

2. Device according to claim 1, wherein the device is constructed for irradiating containers and/or vehicles (5).

**Revendications**

1. Dispositif pour réaliser la radioscopie d'objets (5) au moyen d'un rayonnement en forme d'éventail (11,15), comportant

-un récepteur de rayonnement (13,17), qui reçoit le rayonnement traversant l'objet (5),

-un calculateur (24), qui est branché en aval du récepteur de rayonnement (13,17), pour le calcul d'une image de l'objet radiographié (5) sur la base des signaux du récepteur de rayonnement (13,17),

-une mémoire (25), dans laquelle est mémorisée une image de référence de l'objet (5),

-dans lequel les signaux d'image fournis par le calculateur (24) et les signaux de l'image de référence sont envoyés à un circuit comparateur (26),

-dans lequel en aval du circuit comparateur (26) est branché un moniteur (27) servant à afficher l'image de différence obtenue à partir des signaux du calculateur (24) et des signaux de l'image de référence, et

-dans lequel plusieurs images de référence pouvant être extraites par le circuit de sélection sont mémorisées dans la mémoire (25).

2. Dispositif suivant la revendication 1, ce dispositif étant agencé pour réaliser la radioscopie de conteneurs et/ou de véhicules (5).

FIG 1

EP 0 412 189 B1

FIG 2

FIG 3

EP 0 412 189 B1

9

17

13

23

24

25

26

27

FIG 4